# EUROPÄISCHE PATENTSCHRIFT

(11) **EP 0 381 971 B1**
(45) Veröffentlichungstag und Bekanntmachung des Hinweises auf die Patenterteilung: **30.03.1994**
(21) Anmeldenummer: 90101071.0
(22) Anmeldetag: 19.01.1990
(51) Int. Cl.: D06N 3/04, C08L 33/12, C08J 5/00, C08K 5/00

(54) **Bodenbeläge aus Polymethylmethacrylaten**
Floor covering made of polymethyl methacrylates
Revêtement de sol en polymères méthacryliques de méthyle

(30) Priorität: 08.02.1989 DE 3903669
(43) Veröffentlichungstag der Anmeldung: 16.08.1990
(73) Patentinhaber: Tarkett Pegulan Aktiengesellschaft, 67227 Frankenthal (DE)
(72) Erfinder: Dürkop, Joachim, Dr., D-5503 Konz-Niedermenning (DE); Blass, Reinhold, D-5511 Ockfen (DE); Oppermann, Horst, D-5501 Pellingen (DE)
(74) Vertreter: Grussdorf, Jürgen, Dr.

(56) Entgegenhaltungen:
- EP-A- 0 342 562
- EP-A- 0 381 950
- US-A- 4 210 567

## Beschreibung

Die Erfindung betrifft neuartige Bodenbeläge aus Polymethylmethacrylaten, Weichmachern und gegebenenfalls Hilfsstoffen, sowie Verfahren zur ihrer Herstellung.

PVC-Kunststoffbodenbeläge finden heute in großem Umfang Verwendung aufgrund ihrer vielfältigen dekorativen Möglichkeiten, ihrer Schäumbarkeit bzw. chemischen Prägung, einfachen Verlegung, weitgehenden Beständigkeit gegen Abnutzung und leichten Pflegbarkeit. Diesen Anforderungen, insbesondere die Möglichkeit der Schäumbarkeit und chemischen Prägbarkeit müssen auch alternative, PVC-freie Beläge entsprechen.

Der Markt bzw. Marktsegmente und einzelne Kommunen verlangen heute einen PVC-freien Bodenbelag.

Solche Beläge existieren zwar in Form von Linoleum und Gummi-Belägen, jedoch erfüllen diese Beläge nur einen Teil der Palette der PVC-Qualitäten und Eigenschaften. Aufgrund ihrer mangelhaften Wirtschaflichkeit und im Falle des Linoleums schwierigen Herstellbarkeit und schlechter Handhabung aufgrund ihrer Eigenschaften, werden diese Produkte im wesentlichen durch Bodenbeläge aus PVC oder PVC-haltigen Mischungen ersetzt.

Um sowohl dem Wunsch des Marktes als auch der nötigen Wirtschaftlichkeit und Gebrauchsfähigkeit des Produktes Rechnung zu tragen, stellt sich daher die Aufgabe, Bodenbeläge zu entwickeln, welche frei von PVC sind, jedoch in den Eigenschaften mit dem PVC-Belag konkurrieren können. Ganz wesentlich ist, daß solche Beläge auf dem vorhandenen, sehr teuren Maschinenpark der PVC-Fußboden-Hersteller verarbeitbar sein müssen.

Die Lösung dieser Aufgabe ist durch die in den Patentansprüchen näher gekennzeichneten Merkmale möglich.

Es ist bereits bekannt, daß man auf einen Bodenbelag, beispielsweise aus PVC eine Trittschicht aus Acrylatpolymeren aufbringen kann, indem man entweder eine Organosollösung oder eine wäßrige Dispersion des Acrylats als Schicht aufbringt und das Lösungsmittel heraustrocknet (z.B. EP-A 0174643) oder Monomere des Acrylats mit einem geeigneten Photopolymersationsmittel als Schicht aufbringt und anschließend durch Polymerisation aushärtet. (DE-B 28 40 581).

Aus der nachveröffentlichten EP-A 0342562 sind PVC-Bodenbeläge bekannt, deren Laufschicht aus einem Acrylat-Plastisol hergestellt ist. Die dünne Laufschicht besteht zu 90 - 70 % aus Emulsionspolymerisat und 10 - 30 % aus Suspensionspolymerisat und enthält auf 10 Teile Acrylat 5 - 20 Teile Weichmacher. Die Oberfläche solcher Beläge erscheint trocken.

Plastisole aus Copolymerisaten von Methylmethacrylat und geeigneten Weichmachern sind ferner als Überzugsmittel für Metalle bekannt (DE-C 25 43 542, DE-C 31 39 090 und DE-C 27 22 752). In der DE-C 24 54 235 sind ferner Plastisole auf Acrylatbasis, bestehend aus Methylmethacrylatcopolymerisaten und/oder Methacrylsäureestern von C₂-C₁₀-Alkoholen bekannt, welche in Mischung mit organischen Weichmachern, inerten Füllstoffen und gegebenenfalls Haftvermittlern als Korrosisons- und Abriebschutz für Stahlbleche, als Abdichtungsmittel, als Metallkleber und als Beschichtungsmasse Verwendung finden sollen. Ferner wird die Eignung zum Imprägnieren und Beschichten von Textilien, Fußbodenbelägen, Teppichrücken etc. beschrieben. Neben der Verwendung als Dichtungsmaterialien sollen solche Mischungen auch zur Herstellung von Spielzeug, technischen Teilen und zum Walzen von Folien und Bändern geeignet sein. Eine Nacharbeitung der in dieser Schrift beschriebenen Rezepturen zeigt, daß solche Mittel sich zwar als Überzugsstoffe eignen, jedoch als Hauptbestandteil eines Bodenbelages nicht geeignet sind, da sie aufgrund der verwendeten Weichmacher und Polymeren auch nach längerer Trocknungszeit und Beimischung von inerten Füllstoffen eine klebrige Oberfläche behalten. Aus solchem Material hergestellte Bahnen können daher weder aufgerollt und gelagert werden, noch sind sie als Bodenbelag geeignet, da sie Schmutz anziehen und die Laufeigenschaften durch den ausgeschwitzten Weichmacher für eine normale Benutzung nicht ausreichend sind.

Überraschenderweise hat sich nunmehr herausgestellt, daß durch die einfache Maßnahme als Polymeres ein reines Polymethylmethacrylat einzusetzen und dieses teilweise in Form eines Emulsions- oder Sprühpolymerisats und teilweise in Form eines Suspensionspolymerisats einzusetzen, hervorragende Bodenbeläge hergestellt werden können.

Unter Emulsionspolymerisat wird dabei ein Produkt verstanden, bei dem die Monomeren zunächst in einer geeigneten wäßrigen Phase bis zu einer Emulsion, d.h. einer Tropfengröße von 0,1-50 µm, verteilt werden und anschließend in dieser Form durchpolymerisiert werden. Vorzugsweise wird ein Polymerisat mit Teilchen einer Korngröße von etwa 1-10 µm Durchmesser eingesetzt, welche sich ihrerseits zu größeren Aggregaten mit mittleren Durchmessern von 50-100 µm zusammenlagern.

Unter Suspensionspolymerisat wird ein entsprechendes Produkt verstanden, bei dem die Monomeren bis zu einer Tropfengröße von ca. 50 bis 200 µm zerteilt werden und in dieser Form zu Kunststoffperlen polymerisiert werden. Methoden zur Herstellung solcher Produkte, welche als Lackrohstoffe in großer Menge verwendet werden, sind in der Literatur bekannt.

Beim Vermischen der vorgenannten Komponenten mit geeigneten Mengen eines Weichmachers, lassen sich Plastisole herstellen, welche in gleicher Weise und auf den gleichen Maschinen verarbeitet werden können, wie die bekannten Plastisole auf Basis von PVC, so daß für die Verarbeitung der neuartigen Bodenbeläge keine zusätzlichen Investitionen erforderlich sind.

Es hat sich allerdings gezeigt, daß eine Reihe von Weichmachern, welche bei der Herstellung von PVC-Bodenbelägen erfolgreich verwendet werden, für die Herstellung der erfindungsgemäßen Bodenbeläge nicht oder nur schlecht geeignet sind. Mit solchen Weichmachern hergestellte Mischungen bilden entweder keine verarbeitbaren Plastisole oder hinterlassen nach dem Gelieren klebrige, nicht begeh- oder wickelfähige Oberflächen. Zu den nicht oder wenig geeigneten Weichmachern gehören beispielsweise Dioctylphthalat, Diisononylphthalat und Diisodecylphthalat sowie lineare höher Alkylphthalate, Sebacate und andere aliphatische Mono- und Dicarbonsäureester und einige andere Lösungsmittel, welche insbesondere als Polymerweichmacher für PVC weit verbreitet sind.

Als geeignete Weichmacher haben sich beispielsweise Niederalkylphthalate, insbesondere Methyl-, Ethyl-, Propyl- und Butylphthalat, Benzyloctylphthalat und verschiedene Alkylphosphate sowie aromatische Phosphate, Citronensäureester, Carbamidweichharze und Benzoesäureester erwiesen. Die Eignung anderer Weichmacher soll durch diese Aufzählung jedoch nicht ausgeschlossen sein und läßt sich durch einen einfachen Mischungsversuch leicht feststellen. Die Auswahlkriterien entsprechen denen die für andere Plastisole bekannt sind, d.h. der ausgewählte Weichmacher bzw. das ausgewählte Weichmachergemisch muß einerseits der polymeren Mischung eine ausreichende Plastizität verleihen, wobei diese auch nach längerer Lagerung erhalten bleiben soll, andererseits soll der Weichmacher nach dem Gelieren des Plastisols auch bei längerer Lagerung nicht ausschwitzen, d.h. die Oberflächen trocken und klebfrei bleiben.

Die Mischung kann ferner 0-100 Gew.-% inerte Hilfsstoffe bezogen auf die Gesamtmenge der eingesetzten Polymethylmethacrylate enthalten, die die Viskosität der Plastisole erhöhen und die Abriebfestigkeit der daraus hergestellten Bodenbeläge verbessern. Geeignete Füllstoffe sind z.B. Kreide, Schwerspat, Kieselsäure, Glaspulver, Ruß, Titandioxid oder auch Farbpigmente, welche gleichzeitig die Lichtdurchlässigkeit und Farbe des Polyacrylats verändern. Solche Stoffe sind aus der Herstellung entsprechender PVC-Beläge bekannt. Ferner können Bactericide, Antistatica etc. enthalten sein.

Zur Herstellung geschäumter Schichten können der Mischung entsprechende Treibmittel, z.B. Azoverbindungen, zugefügt werden oder ein Aufschäumen durch Einpressen von Luft oder durch Wasserverdampfung erzeugt werden. Die Verwendung chemischer Treibmittel hat den Vorteil, daß durch spezielle Aktivatoren die Schäumtemperatur auf die Geliertemperatur der Mischung eingestellt werden kann und daß durch Zugabe von Inhibitoren, welche z.B. auf die Oberfläche aufgedruckt werden, das Schäumen an bestimmten Stellen verhindert und dadurch eine Oberflächenstrukturierung erreicht werden kann. Trotz Verwendung anderer Weichmacher und anderer Polymerer lassen sich überraschenderweise die gleichen Stoffe einsetzen wie sie auch für die Ausschäumung von PVC-Plastisolen bekannt sind. Diisocyanate als Treibmittel und Zinkoxid als Aktivator haben sich dabei besonders bewährt. Als Inhibitor sind beispielsweise Triazol und seine Derivate, welche die Zinkionen komplexieren und damit ihre aktivierende Wirkung inhibieren, mit Erfolg eingesetzt worden.

Im Gegensatz zu Metallüberzügen aus Acrylatlacken, welche bei höheren Temperaturen über Zeiträume von 1/2 bis 2 Stunden eingebrannt werden können, muß bei der Herstellung von Bodenbelagsbahnen eine ausreichende Produktionsgeschwindigkeit gewährleistet sein. Gelierzeiten und Ausschäumzeiten von 1-5 Min., welche der üblichen Durchlaufzeit der Bahn durch den Gelier/Ausschäumofen entsprechen, können mit den erfindungsgemäßen Mischungen eingehalten werden. Die notwendigen Temperaturen liegen dabei je nach Art der Mischung und der Menge des Weichmachers bei etwa 160-200, vorzugsweise 170-190°C. Die wieder abgekühlten Bahnen erweisen sich anschließend als trocken und nicht mehr klebend, so daß sie unmittelbar der Konfektionierung und Verpackung zugeführt werden können.

In den folgenden Beispielen ist die Erfindung näher erläutert, ohne daß sie dadurch beschränkt werden soll.

### Rezeptur-Beispiele

### A) Rezepturen für Plastisole auf Basis Polymethylmethacrylat

### Beispiel 1 - Kompaktstrich

| | |
|---|---|
| Polymethylmethacrylat Emulsionspolymerisat Korngröße ¢ ca 100µm | 335kg |
| Polymethylmethacrylat Suspensionspolymerisat Korngröße ¢ 50-200 µm | 165 kg |
| Benzyloctylphthalat | 270 kg |
| Octyldiphenylphosphat | 80 kg |
| Pigment (TiO₂) | 20 kg |
| Calciumcarbonat | 125 kg |

### Beispiel 2 - mechanischer Schaum

| | |
|---|---|
| Polymethylmethacrylat Emulsionspolymerisat Korngröße ¢ 100 µm | 335 kg |
| Polymethylmethacrylat Suspensionspolymerisat Korngröße ¢ 50-200 µm | 165 kg |
| Octyldiphenylphosphat | 130 kg |
| Benzyloctylphthalat | 222 kg |
| Schaumstabilisator DC 1250 (Wz. der Fa. DOW CORNING) | 20 kg |
| Pigment (TiO₂) | 16 kg |
| Calciumcarbonat | 100 kg |

### Beispiel 3 - Chemischer Acrylat-Schaum

| | |
|---|---|
| Polymethylmethacrylat Suspensionspolymerisat Korngröße ¢ 50-200 µm | 135 kg |
| Polymethylmethacrylat Emulsionspolymerisat Korngröße ¢ 100 µm | 135 kg |
| Benzyloctylphthalat | 150 kg |
| Octyldiphenylphosphat | 30 kg |
| Treibmittelgemisch Azodicarbonamid/Zinkoxid | 19 kg |
| Calciumcarbonat | 108 kg |

### Beispiel 4 - Acrylat Laufschicht (Deckstrich)

| | |
|---|---|
| Polymethylmethacrylat Perlpolymerisat,Korngröße ¢ 20-30 µ | 40 kg |
| Polymethylmethacrylat Sprühpolymerisat,Korngröße ¢ 100 µm | 230 kg |
| Benzyloctylphthalat | 100 kg |
| Octyldiphenylphosphat | 30 kg |
| Triethylenglykoldimethacrylat | 50 kg |
| t-Butylperbenzoat | 0,15 kg |

### Beispiel 5-Herstellung von elastischen Bodenbelägen auf Basis Acrylaten

Das nachfolgende Verfahrensbeispiel soll die Herstellung eines Acrylat-Streichbelages aus Acrylat-Plastisolen gemäß den vorstehenden Beispielen beschreiben.

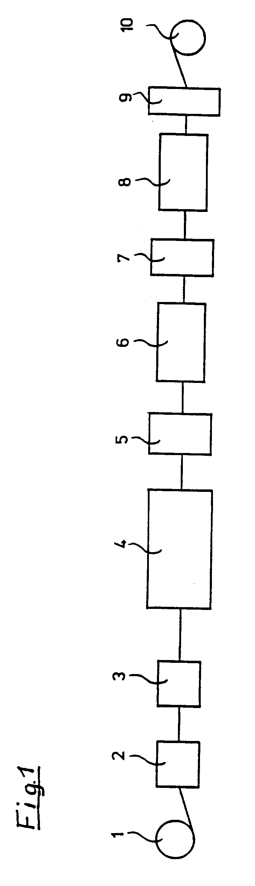

Ein heterogener Acrylat-Schaum-Belag kann im nachfolgenden Herstellverfahren auf einer bereits bestehenden PVC-Streich-Anlage hergestellt werden. Die verwendete Vorrichtung ist schematisch in der Fig. 1 dargestellt.

Ein Trägermaterial, z.B. Glasvlies wird mittels einer Speicherdosierung (1) der Anlage endlos zugeführt. In dem ersten Auftragswerk (2) wird mit einer nicht-dargestellten Beschichtungsvorrichtung als sogenannter Grundstrich eine Acrylatpaste gemäß Beispiel 1 zum Schließen und zur Glättung des Glasvlieses aufgetragen und z.B über eine Geliertrommel geglättet und geliert.

Im zweiten Auftragswerk (3) wird über eine zweite Beschichtungsvorrichtung eine chemische Acrylat-Schaum-Paste gemäß Beispiel 3 aufgetragen (ca. 350 g/m²) und ebenfalls z.B. über Kontaktgelierung angeliert, aber noch nicht chemisch verschäumt.

Auf die erhaltene glatte Schaum-Oberfläche wird in der Druckmaschine (4) ein mehrfarbiges Druckdessin aufgebracht und z.B. in der Beschichtungsmaschine (5) über ein drittes mit einer transparenten Acrylat-Nutzschicht gemäß Beispiel 4 abgedeckt (ca. 300 g/m²). Das so erhaltene angelierte Plastisol-Acrylat-Flächen-Gebilde wird in einem Gelier- und Schäumofen (6) geliert und gleichzeitig verschäumt. Zur Abdeckung der teilweise noch offenen Glasvlies-Rückseite wird in einer weiteren Beschichtungsmaschine (7) mit einem Rückseitenstrich (z.B. mechanischer Schaum gemäß Beispiel 2 oder Kompaktpaste gemäß Beispiel 1, ca. 500 g/m²) das Glasvlies eingebettet und anschließend ausgeliert. Nach der dann sich anschließenden Kontrolle wird der fertige Fußbodenbelag konfektioniert, auf Rollen (10) aufgerollt und dem Lager zugeführt.

### Bezugszeichenliste

- 1: Abrollung
- 2: 1. Auftragswerk
- 3: 2. Auftragswerk
- 4: Druckmaschine
- 5: Beschichtungsmaschine
- 6: Gelierofen
- 7: Beschichtungsmaschine
- 8: Gelierofen
- 9: Kontrolle
- 10: Verpackung

## Patentansprüche

1. Aus Pasten hergestellte Bodenbeläge aus Polymethylmethacrylaten, Weichmachern und gegebenenfalls Hilfsstoffen, dadurch gekennzeichnet, daß sie aus einer Mischung von
a) 100 Teilen Emulsionspolymerisat aus Methylmethacrylat,
b) 5-150 Teilen Suspensionspolymerisat aus Methylmethacrylat,
c) 50-150 % von einem oder mehreren geeigneten Weichmachern,
d) ggfl. 0 - 100 % an sich bekannter Hilfsstoffe
wobei c) und d) jeweils auf die Gesamtmenge von a) und b) bezogen sind,
bestehen.

2. Bodenbelag gemäß Anspruch 1, dadurch gekennzeichnet, daß er 20 - 100 Teile Suspensionspolymerisat enthält.

3. Bodenbelag gemäß Anspruch 1 oder 2, dadurch gekennzeichnet, daß ein oder mehrere Weichmacher aus der Gruppe niedermolekulare Alkylphthalate, Alkoxialkylphthalate, Benzylalkylphthalate, Alkylphosphate, aromatische Phosphate, Citronensäureester, Carbamidweichharze oder Benzoesäureester enthalten sind.

4. Bodenbeläge gemäß einem der Ansprüche 1 bis 3, dadurch gekennzeichnet, daß bis zu 50 % der Weichmacher aus monomerem vernetzbarem Methacrylsäureester, insbesondere Methylmethacrylat und einem Härter bestehen.

5. Bodenbeläge gemäß Anspruch 1 bis 4, dadurch gekennzeichnet, daß als Hilfsstoffe inerte Füllstoffe, Farbstoffe, Bactericide, Antistatica etc. enthalten sind.

6. Bodenbeläge gemäß Anspruch 1 bis 5, dadurch gekennzeichnet, daß die Mischung ein Schaummittel enthält, welches bei erhöhter Temperatur ganz oder partiell aufgeschäumt ist.

7. Bodenbeläge gemäß Anspruch 1 bis 6, dadurch gekennzeichnet, daß sie ein Stützgewebe oder eine Deck- oder Trägerschicht enthalten.

8. Verfahren zur Herstellung von Bodenbelägen gemäß einem der Ansprüche 1 bis 7, dadurch gekennzeichnet, daß die Komponenten zu einem Plastisol vermischt, mittels Beschichtungsvorrichtungen auf eine Bahn in entsprechender Dicke aufgetragen werden und bei Temperaturen von 160 °C - 200 °C geliert, getrocknet und gegebenenfalls aufgeschäumt werden.

9. Verfahren gemäß Anspruch 8 zur Herstellung von Bodenbelägen gemäß Anspruch 6, dadurch gekennzeichnet, daß die schaummittelhaltige Mischung einen Aktivator, wie Zinkoxid, enthält und durch Bedrucken mit einem Inhibitor, wie Triazol partiell desaktiviert wird.

10. Verfahren gemäß Anspruch 8 zur Herstellung von Bodenbelägen gemäß Anspruch 6, dadurch gekennzeichnet, daß schaummittelhaltige und schaummittelfreie Schichten zu einer Bahn verbunden und gleichzeitig oder in aufeinanderfolgenden Schritten geliert und aufgeschäumt werden.

## Claims

1. Floor coverings of polymethyl methacrylates, plasticisers and possibly adjuvant materials produced from pastes, characterised in that they consist of a mixture of
a) 100 parts of emulsion polymer of methyl methacrylate,
b) 5 - 150 parts of suspension polymer of methyl methacrylate,
c) 50 - 150% of one or more suitable plasticisers,
d) possibly 0 - 100% of per se known adjuvant materials,
whereby c) and d) are, in each case, referred to the total amount of a) and b).

2. Floor covering according to claim 1, characterised in that it contains 20 - 100 parts of suspension polymer.

3. Floor covering according to claim 1 or 2, characterised in that there are contained one or more plasticisers from the group of low molecular alkyl phthalates, alkoxyalkyl phthalates, benzyl alkyl phthalates, alkyl phosphates, aromatic phosphates, citric acid eaters, carbamide soft resins or benzoic acid eaters.

4. Floor coverings according to one of claims 1 to 3, characterised in that up to 50% of the plasticiser consist of monomeric cross-linkable methacrylic acid eaters, especially methyl methacrylate, and a hardener.

5. Floor coverings according to claim 1 to 4, characterised in that, as adjuvant materials, there are contained inert filling materials, colouring materials, bactericides, antistatics etc.

6. Floor coverings according to claim 1 to 5, characterised in that the mixture contains a foaming agent which, at elevated temperature, is wholly or partly foamed up.

7. Floor coverings according to claims 1 to 6, characterised in that they contain a supporting web or a covering or carrying layer.

8. Process for the production of floor coverings according to one of claims 1 to 7, characterised in that the components are mixed to give a plastisol, are applied by means of coating devices to a strip in appropriate thickness and gelled, dried and possibly foamed at 160°C - 200°C.

9. Process according to claim 8 for the production of floor coverings according to claim 6, characterised in that the foaming agent-containing mixture contains an activator, such as zinc oxide, and is partly deactivated by printing with an inhibitor, such as triazole.

10. Process according to claim 8 for the production of floor coverings according to claim 6, characterised in that foaming agent-containing and foaming agent-free layers are connected to give a strip and gelled and foamed up simultaneously or in successive steps.

## Revendications

1. Revêtements de sol préparés à partir de pâtes, à base de polyméthacrylates de méthyle, d'agents ramollissants et éventuellement de substances auxiliaires, caractérisés en ce qu'ils sont constitués d'un mélange de
a) 100 parties d'un produit de polymérisation en émulsion à base de méthacrylate de méthyle,
b) 5-150 parties d'un produit de polymérisation en suspension à base de méthacrylate de méthyle,
c) 50-150 % d'un ou de plusieurs agents ramollissants appropriés,
d) éventuellement 0-100 % de substances auxiliaires connues en soi,
c) et d) se rapportant chacun à la quantité globale de a) et b).

2. Revêtement de sol suivant la revendication 1, caractérisé en ce qu'il contient 20 à 100 parties de produit de polymérisation en suspension.

3. Revêtement de sol suivant l'une des revendications 1 et 2, caractérisé en ce qu'un ou plusieurs agents ramollissants du groupe comprenant des phtalates d'alkyle de poids moléculaire inférieur, des phtalates d'alcoxyalkyle, des phtalates de benzylalkyle, des phosphates d'alkyle, des phosphates aromatiques, des esters d'acide citrique, des résines molles de carbamide ou des esters d'acide benzoïque sont contenus.

4. Revêtements de sols suivant l'une des revendications 1 à 3, caractérisés en ce que jusqu'à 50 % des agents ramollissants sont constitués d'un ester d'acide méthacrylique monomère, réticulable, en particulier de méthacrylate de méthyle, et d'un agent durcissant.

5. Revêtements de sol suivant l'une des revendications 1 à 4, caractérisés en ce que des substances de remplissage inertes, des colorants, des bactéricides, des antistatiques, etc. sont contenus en tant que substances auxiliaires.

6. Revêtements de sol suivant l'une des revendications 1 à 5, caractérisés en ce que le mélange contient un produit mousse qui est amené à mousser totalement ou partiellement à une température élevée.

7. Revêtements de sol suivant l'une des revendications 1 à 6, caractérisés en ce qu'ils contiennent un tissu de support ou une couche de recouvrement ou de support.

8. Procédé de préparation de revêtements de sol suivant l'une des revendications 1 à 7, caractérisé en ce que les composants sont mélangés à un plastisol, sont, au moyen de dispositifs d'enduction, appliqués sur une bande en une épaisseur correspondante et sont, à des températures de 160-200°C, gélifiés, séchés et éventuellement amenés à mousser.

9. Procédé suivant la revendication 8, pour la préparation de revêtements de sol suivant la revendication 6, caractérisé en ce que le mélange contenant un produit mousse contient un agent d'activation, tel que de l'oxyde de zinc, et est partiellement désactivé par impression d'un inhibiteur, tel que du triazole.

10. Procédé suivant la revendication 8, pour la préparation de revêtements de sol suivant la revendication 6, caractérisé en ce que des couches contenant un produit mousse et des couches exemptes de produit mousse sont reliées à une bande et sont, simultanément ou en étapes successives, gélifiées et amenées à mousser.
